(19) **Europäisches Patentamt / European Patent Office / Office européen des brevets**

(11) **EP 4 428 957 A1**

(12) **EUROPEAN PATENT APPLICATION**
published in accordance with Art. 153(4) EPC

(43) Date of publication:
**11.09.2024 Bulletin 2024/37**

(21) Application number: **22889927.4**

(22) Date of filing: **31.10.2022**

(51) International Patent Classification (IPC):
$H01M\ 4/86^{(2006.01)}$     $H01M\ 4/88^{(2006.01)}$
$H01M\ 4/90^{(2006.01)}$     $H01M\ 4/92^{(2006.01)}$
$H01M\ 4/96^{(2006.01)}$     $H01M\ 8/10^{(2016.01)}$

(52) Cooperative Patent Classification (CPC):
**H01M 4/86; H01M 4/88; H01M 4/90; H01M 4/92; H01M 4/96; H01M 8/10;** Y02E 60/50

(86) International application number:
**PCT/JP2022/040673**

(87) International publication number:
**WO 2023/080107 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2021 JP 2021180603**

(71) Applicant: **DIC Corporation**
**Tokyo 174-8520 (JP)**

(72) Inventors:
• **GOTO, Yusaku**
  **Sakura-shi, Chiba 285-8668 (JP)**
• **KATO, Shinji**
  **Sakura-shi, Chiba 285-8668 (JP)**

(74) Representative: **TBK**
**Bavariaring 4-6**
**80336 München (DE)**

(54) **ELECTRODE CATALYST CONTAINING POROUS SILICON OXYCARBIDE COMPOSITE MATERIAL, ELECTRODE, FUEL CELL, AND METHOD FOR PRODUCING ELECTRODE CATALYST CONTAINING POROUS SILICON OXYCARBIDE COMPOSITE MATERIAL**

(57)     An electrode catalyst includes a porous silicon oxycarbide composite material containing porous silicon oxycarbide having a three-dimensional skeletal structure and a carbon-containing material retained in the three-dimensional skeletal structure and noble metal particles supported on the porous silicon oxycarbide composite material, and has a BET specific surface area of 100 m$^2$/g or more and an electrical conductivity of $1.0 \times 10^{-6}$ S/cm or more.

FIG. 1

ADD ORGANOALKOXYSILANE TO ACIDIC AQUEOUS SOLUTION CONTAINING CARBON-CONTAINING MATERIAL OR ORGANIC POLYMER IN ADDITION TO SURFACTANT AND pH ADJUSTER AND FORM GEL THROUGH SOLGEL REACTION — STEP (A)

WASH GEL WITH ALCOHOL — STEP (B)

DRY WASHED GEL TO FORM POROUS SILICON OXYCARBIDE PRECURSOR — STEP (C)

FIRE POROUS SILICONE OXYCARBIDE PRECURSOR — STEP (D)

**Description**

TECHNICAL FIELD

The present invention relates to an electrode catalyst containing a porous silicon oxycarbide composite material, an electrode, a fuel cell, and a method for producing an electrode catalyst containing a porous silicon oxycarbide composite material.

This application is based upon and claims the benefit of priority of the prior Japanese Patent Application No. 2021-180603, filed in Japan on November 4, 2021, the entire contents of which are incorporated herein by reference.

BACKGROUND ART

Fuel cells are a device that generates electricity and heat through a chemical reaction to produce water from hydrogen and oxygen, and there are multiple kinds of fuel cells, such as phosphoric acid fuel cells (PAFC), molten carbonate fuel cells (MCFC), solid oxide fuel cells (SOFC), and polymer electrolyte fuel cells (PEFC). Among these, polymer electrolyte fuel cells (PEFC) have a structure in which a catalyst layer forming an anode (fuel electrode) is provided on one surface of a polymer electrolyte membrane and a catalyst layer forming a cathode (air electrode) is provided on the other surface as well as a gas diffusion layer is attached to the outside of each catalyst layer. The catalyst layer is formed of a catalyst-supporting carrier in which a particulate catalyst containing a noble metal is supported on the surface of carrier particles at the nanolevel in a highly dispersed manner.

Currently, carbon-based materials having a high specific surface area and high conductivity are used as a catalyst-supporting carrier. However, a decrease in catalytic performance due to corrosion of the carbon carrier and the like in the cathode and anode has become a major problem. Hence, there is an urgent need to develop a material with a large specific surface area, high conductivity, and excellent durability to replace carbon.

For example, Patent Literature 1 discloses a method for producing a porous silicon oxycarbide ceramics, which includes (i) preparing a mixed solution by mixing a silicon-containing organic compound with a dispersion in which a carbon-containing compound and a pore-forming agent are dispersed; (ii) subjecting the obtained mixed solution to a polymerization treatment under a temperature condition of 0 to 200°C, then subjecting the obtained product to primary firing at a temperature of 200°C or higher and 800°C or lower, and performing pulverization and classification to prepare a primarily fired powder; and (iii) subjecting the primarily fired powder to secondary firing under a temperature condition of 800°C or higher and 1150°C or lower. In this production method, the BET specific surface area is said to be 0.5 m$^2$/g to 50 m$^2$/g.

Moreover, the above-mentioned Patent Literature 1 discloses a composite material containing the above-mentioned porous silicon oxycarbide ceramics and a conductive carbon material such as carbon black. In this composite material, the percentage content of the conductive carbon material is 1% by mass to 30% by mass, and it is said that this makes it possible to easily decrease the electrical resistance.

Non-Patent Literature 1 discloses a method for producing a porous silicon oxycarbide ceramics, which includes mixing a silicone resin, a pore-forming agent, a firing shrinkage controlling agent, and graphite in an organic solvent, drying the mixture, and then firing the obtained mixed solid at 1000°C. In this production method, it is said that the BET specific surface area is 6.2 m$^2$/g to 32.3 m$^2$/g and the electrical conductivity is 3 $\times$ 10$^{-2}$ S/cm to 9 $\times$ 10$^{-2}$ S/cm.

Non-Patent Literature 2 reports a method for producing a porous silicon oxycarbide ceramics, which includes conducting polycondensation using a bis(trialkoxysilane) compound crosslinked with an alkylene group as a silicon-containing organic compound in an alcohol solvent by a sol-gel reaction and firing the obtained porous alkylene-crosslinked polysilsesquioxane gel at 1000°C. In this production method, it is said that a maximum BET specific surface area of 452 m$^2$/g is obtained.

Moreover, as an electrode catalyst and a fuel cell, Patent Literature 2 discloses an electrode catalyst including a SiO$_x$C$_y$H$_z$ matrix film in which a catalyst substance is dispersed, and a fuel cell containing the electrode catalyst.

CITATION LIST

PATENT LITERATURE

PTL 1: JP2015-160762A
PTL2: JPH11-510643A

NON PATENT LITERATURE

NPL 1: T. C. de Almeida e Silva et al. Catalysis Science & Technology v9, p854-866 (2019).
NPL 2: P. R. Aravind et al. Microporous and Mesoporous Materials v142, p511-517 (2011).

SUMMARY OF INVENTION

TECHNICAL PROBLEM

However, in order to achieve high efficiency and a high output, electrodes for fuel cells require a catalyst-supporting carrier that simultaneously satisfies a high specific surface area and high conductivity, but the BET specific surface areas as disclosed in Patent Literature 1 and Non-Patent Literature 1 cannot be said to be sufficient, and there is room for improvement. Moreover, the above-mentioned Patent Literature 1 only discloses that the electrical resistance can be decreased by mixing a conductive carbon material with a porous silicon oxycarbide ceramics, does not disclose an example of producing a porous silicon oxycarbide ceramics mixed with a conductive carbon material, and thus does not disclose quantitative evaluation of conductivity.

The above-mentioned Non-Patent Literature 2 discloses that a porous silicon oxycarbide ceramics has a BET specific surface area of 452 $m^2$/g, but this is an example of BET specific surface area achieved using a special silicon-containing organic compound called bis(trialkoxysilane) crosslinked with an alkylene group, and Non-Patent Literature 2 does not disclose or suggest the conductivity.

Patent Literature 2 discloses an electrode catalyst in which a $SiO_xC_yH_z$ polymer film is used as a carrier and catalyst particles such as platinum are deposited on the polymer film, but does not disclose that a porous silicon oxycarbide ceramics is used as a carrier, and also does not disclose or suggest the evaluation of properties such as conductivity, catalytic activity, and durability when a porous silicon oxycarbide ceramics is used.

An object of the invention is to provide an electrode catalyst that exhibits both excellent catalytic performance and durability and can offer excellent power generation performance and cell durability, and to provide a method for producing an electrode catalyst containing a porous silicon oxycarbide composite material obtained using a type of organoalkoxysilane that is widely distributed as an industrial raw material.

SOLUTION TO PROBLEM

In order to achieve the object, the invention has achieved the production of a porous silicon oxycarbide composite material in which a pore structure (mesopores) in a mesoscopic region is developed and a carbon-containing material is disposed in a porous three-dimensional structural skeleton at the nanolevel by preparing a precursor gel by allowing a carbon-containing material or an organic polymer serving as a carbon source to coexist and firing the precursor gel during the sol-gel reaction process of an aqueous organoalkoxysilane solution in the coexistence with a surfactant while paying attention so as not to interfere with the formation of a porous gel. This makes it possible to provide a porous silicon oxycarbide composite material that has both a large BET specific surface area and high conductivity in a well-balanced manner. In addition, it has been found out that by using this porous silicon oxycarbide composite material as a carrier for noble metal particles, noble metal particles, particularly small-sized noble metal particles, can be supported in a highly dispersed manner and an electrode catalyst that offers both excellent catalytic performance and durability as an electrode catalyst can be obtained.

In other words, the invention provides the following means.

[1] An electrode catalyst containing a porous silicon oxycarbide composite material, the electrode catalyst including:

a porous silicon oxycarbide composite material containing porous silicon oxycarbide having a three-dimensional skeletal structure and a carbon-containing material retained in the three-dimensional skeletal structure; and noble metal particles supported on the porous silicon oxycarbide composite material, in which the porous silicon oxycarbide composite material has a BET specific surface area of 100 $m^2$/g or more and an electrical conductivity of $1.0 \times 10^{-6}$ S/cm or more.

[2] The electrode catalyst containing a porous silicon oxycarbide composite material according to [1], in which a total pore volume of the porous silicon oxycarbide composite material is 0.5 $cm^3$/g or more.

[3] The electrode catalyst containing a porous silicon oxycarbide composite material according to [1] or [2], in which a pore size of the porous silicon oxycarbide composite material is 2 nm or more and 200 nm or less.

[4] The electrode catalyst containing a porous silicon oxycarbide composite material according to [1], in which a content of the carbon-containing material in the porous silicon oxycarbide composite material is 2.5% by mass or more and 50% by mass or less.

[5] The electrode catalyst containing a porous silicon oxycarbide composite material according to [4], in which the carbon-containing material includes one or a plurality selected from carbon black, carbon nanofibers, carbon nanotubes, or low crystalline nanocarbons.

[6] The electrode catalyst containing a porous silicon oxycarbide composite material according to [5], in which an average diameter of primary particles of the carbon-containing material is 10 nm or more and 200 nm or less.

[7] The electrode catalyst containing a porous silicon oxycarbide composite material according to [1], in which an average particle size of the noble metal particles is 2 nm or more and 20 nm or less.

[8] The electrode catalyst containing a porous silicon oxycarbide composite material according to [1], in which a content of the noble metal particles is 10% by mass or more and 50% by mass or less when a total mass of the electrode catalyst is 100% by mass.

[9] The electrode catalyst containing a porous silicon oxycarbide composite material according to claim 7 or 8, in which the noble metal particles are formed of one or two or more selected from platinum (Pt), rhodium (Rh), palladium (Pd), ruthenium (Ru), iridium (Ir), or gold (Au).

[10] An electrode including a layer containing the electrode catalyst according to any one of [1] to [9].

[11] A fuel cell including the electrode according to [10].

[12] A method for producing an electrode catalyst containing a porous silicon oxycarbide composite material, the method including:

a step (A) of adding an organoalkoxysilane to an acidic aqueous solution containing a surfactant and a pH adjuster and forming a gel through a sol-gel reaction of the organoalkoxysilane;
a step (B) of washing the gel with an alcohol;
a step (C) of drying the washed gel to form a porous silicon oxycarbide precursor;
a step (D) of firing the porous silicon oxycarbide precursor to obtain a porous silicon oxycarbide composite material;
a step (E) of mixing the porous silicon oxycarbide composite material and a dispersion containing noble metal colloids to obtain an electrode catalyst precursor; and
a step (F) of drying the electrode catalyst precursor to obtain an electrode catalyst containing a porous silicon oxycarbide composite material supporting noble metal particles, in which
a carbon-containing material or an organic polymer is further added to the acidic aqueous solution and a gel containing the carbon-containing material or organic polymer is formed in the step (A).

[13] The method for producing an electrode catalyst containing a porous silicon oxycarbide composite material according to [12], in which the sol-gel reaction is conducted at 25°C or higher and 80°C or lower in the step (A).

[14] The method for producing an electrode catalyst containing a porous silicon oxycarbide composite material according to [12], in which the organoalkoxysilane is represented by the following Formula (1) or Formula (2):

$$R^1\text{-}SiR^2_x(OR^3)_{3-x} \ ... \qquad (1)$$

(where, in the formula, $R^1$ is any group selected from a methyl group, an ethyl group, a vinyl group, or a phenyl group, $R^2$ represents a methyl group, $R^3$ represents a methyl group or an ethyl group, and an integer x is 0 or 1);

$$R^4\text{-}(SiR^S_y(OR^6)_{3-y})_2 \ ... \qquad (2)$$

(in the formula, $R^4$ includes any group selected from a methylene group, an ethylene group, a hexylene group, a vinylene group, a phenylene group, or a biphenylene group, $R^5$ represents a methyl group, $R^6$ represents a methyl group or an ethyl group, and an integer y is 0 or 1).

[15] The method for producing an electrode catalyst containing a porous silicon oxycarbide composite material according to [12], in which a content of the surfactant in the acidic aqueous solution is 0.1% by mass or more and 50% by mass or less.

[16] The method for producing an electrode catalyst containing a porous silicon oxycarbide composite material according to [15], in which the surfactant is a nonionic surfactant and/or a cationic surfactant.

[17] The method for producing an electrode catalyst containing a porous silicon oxycarbide composite material according to [12], in which a content of the pH adjuster in the acidic aqueous solution is 5% by mass or more and 50% by mass or less.

[18] The method for producing an electrode catalyst containing a porous silicon oxycarbide composite material according to [16], in which the pH adjuster includes any one selected from urea, ammonia, or sodium hydroxide.

[19] The method for producing an electrode catalyst containing a porous silicon oxycarbide composite material according to [12], in which a mass ratio of the carbon-containing material or organic polymer to the organoalkoxysilane is 2.5 to 50 : 97.5 to 50.

[20] The method for producing an electrode catalyst containing a porous silicon oxycarbide composite material according to claim 19, in which the carbon-containing material includes one or a plurality selected from carbon black, carbon nanofibers, carbon nanotubes, or low crystalline nanocarbons.

[21] The method for producing an electrode catalyst containing a porous silicon oxycarbide composite material according to [20], in which an average diameter of primary particles of the carbon-containing material is 10 nm or more and 200 nm or less.

[22] The method for producing an electrode catalyst containing a porous silicon oxycarbide composite material according to [19], in which the organic polymer includes one or a plurality selected from phenolic resin, polystyrene, or polydivinylbenzene.

[23] The method for producing an electrode catalyst containing a porous silicon oxycarbide composite material according to [12], in which the surfactant is removed from the acidic aqueous solution as well as water in the acidic aqueous solution is replaced with the alcohol in the step (B).

[24] The method for producing an electrode catalyst containing a porous silicon oxycarbide composite material according to [12], in which the washed gel is dried at room temperature and normal pressure in the step (C).

[25] The method for producing an electrode catalyst containing a porous silicon oxycarbide composite material according to claim 12, in which the porous silicon oxycarbide composite material is fired at 700°C or higher and 1200°C or lower in the step (D).

[26] The method for producing an electrode catalyst containing a porous silicon oxycarbide composite material according to [12], in which the porous silicon oxycarbide composite material and a dispersion containing noble metal colloids are mixed in the step (E) so that a content of the noble metal particles is 10% by mass or more and 50% by mass or less when a total mass of the electrode catalyst obtained in the step (F) is 100% by mass.

[27] The method for producing an electrode catalyst containing a porous silicon oxycarbide composite material according to [26], in which the noble metal colloids in the step (E) include one or two or more selected from platinum colloids, rhodium colloids, palladium colloids, ruthenium colloids, iridium colloids, or gold colloids.

## ADVANTAGEOUS EFFECTS OF INVENTION

According to the invention, it is possible to provide an electrode catalyst that exhibits both excellent catalytic performance and durability and can offer excellent power generation performance and cell durability.

## BRIEF DESCRIPTION OF DRAWINGS

FIG. 1 is a flowchart illustrating an example of a method for producing a porous silicon oxycarbide composite material according to an embodiment of the invention.

FIG. 2 is a scanning electron microscope image of a porous silicon oxycarbide composite material exemplified in Example 1.

FIG. 3 is a $^{29}$Si-NMR spectrum of a porous silicon oxycarbide composite material exemplified in Example 1.

FIG. 4 is a transmission electron microscope image of a porous silicon oxycarbide composite material (electrode catalyst A) on which platinum particles are supported exemplified in Example 21.

FIG. 5 illustrates a cyclic voltammetry (CV) measurement result of electrode catalyst A exemplified in Example 21.

FIG. 6 is a diagram illustrating changes in electrochemically active surface area (ECSA) of electrode catalyst A exemplified in Example 21 with respect to CV measurement cycles.

FIG. 7 illustrates a CV measurement result of electrode catalyst B exemplified in Comparative Example 4.

FIG. 8 is a diagram illustrating changes in ECSA of electrode catalyst B exemplified in Comparative Example 4 with respect to CV measurement cycles.

FIG. 9 is a diagram illustrating measurement results of I-V characteristic and cell resistance of a fuel cell in which electrode catalyst A is used in a cathode catalyst layer exemplified in Example 22.

FIG. 10 is a diagram illustrating a measurement result of potential fluctuation durability of a fuel cell in which electrode catalyst A or Pt/CB (TEC 10E20E) is used in a cathode catalyst layer exemplified in Example 22.

DESCRIPTION OF EMBODIMENTS

<Configuration of electrode catalyst containing porous silicon oxycarbide composite material>

The electrode catalyst according to the present embodiment includes a porous silicon oxycarbide composite material and noble metal particles supported on the porous silicon oxycarbide composite material. The electrode catalyst may contain other materials in addition to the porous silicon oxycarbide composite material and the noble metal particles.

<Configuration of porous silicon oxycarbide composite material>

The porous silicon oxycarbide composite material according to the present embodiment includes porous silicon oxycarbide (SiOC) having a three-dimensional skeletal structure and a carbon-containing material retained in the three-dimensional skeletal structure.

The shape of the porous silicon oxycarbide composite material is not particularly limited, and is, for example, powdery, particulate, fibrous, or needle-shaped, and is preferably powdery or particulate among these.

In a case where the porous silicon oxycarbide composite material is powdery or particulate, the particle size of the porous silicon oxycarbide composite material is not particularly limited, and is, for example, preferably 0.1 $\mu$m or more and 100 $\mu$m or less, more preferably 0.5 $\mu$m or more and 50 $\mu$m, still more preferably 1 $\mu$m or more and 20 $\mu$m or less as a particle size $D_{50}$ of 50% of the cumulative particle size in the volume-based cumulative particle size distribution.

The particle size $D_{50}$ of the porous silicon oxycarbide composite material means a value measured in conformity with JIS Z8825-1: 2013 and, for example, refers to a particle size $D_{50}$ measured using a laser diffraction type particle size distribution analyzer (manufactured by SHIMADZU CORPORATION, SALD-7000).

[Porous silicon oxycarbide]

In porous silicon oxycarbide, a plurality of micropores are each individually provided by the three-dimensional skeletal structure formed by the siloxane network or some or all of the plurality of micropores are provided in a state of being connected to each other.

The BET specific surface area of porous silicon oxycarbide of the present embodiment is 100 $m^2$/g or more, preferably 100 $m^2$/g or more and 1500 $m^2$/g or less, more preferably 200 $m^2$/g or more and 1000 $m^2$/g or less. When the BET specific surface area is less than 100 $m^2$/g, the amount of catalyst particles supported on the carrier surface is insufficient, and desired characteristics such as output and efficiency cannot be obtained in a case where porous silicon oxycarbide is used in an electrode for fuel cells. Moreover, in a case where the BET specific surface area is 1500 $m^2$/g or less, the proportion of mesopores suitable for supporting a catalyst increases and thus the utilization rate of catalyst particles can be further improved.

The total pore volume of porous silicon oxycarbide is preferably 0.5 $cm^3$/g or more, more preferably 0.5 $cm^3$/g or more and 3.0 $cm^3$/g or less, still more preferably 0.6 $cm^3$/g or more and 2.0 $cm^3$/g or less. When the total pore volume of porous silicon oxycarbide is 0.5 $cm^3$/g or more, the reaction gas and electrolyte easily flow in the catalyst layer and the catalytic efficiency can be improved. Meanwhile, when the total pore volume is 3.0 $cm^3$/g or less, favorable manufacturability can be achieved.

The pore size of porous silicon oxycarbide is preferably 2 nm or more and 200 nm or less, more preferably 5 nm or more and 150 nm or less, still more preferably 10 nm or more and 100 nm or less. When the pore size of porous silicon oxycarbide is 2 nm or more and 200 nm or less, the reaction gas and electrolyte easily flow in the catalyst layer and the catalytic efficiency can be improved. In particular, when the pore size of porous silicon oxycarbide is less than 2 nm, it is difficult to supply the reaction gas and electrolyte to the supported catalyst particles and the utilization rate of the catalyst particles decreases significantly.

The BET specific surface area, total pore volume and pore size of porous silicon oxycarbide can be calculated as measured values by a gas adsorption method, and mean values calculated from the adsorbed amount and the condensation of non-corrosive gas, for example, when a non-corrosive gas such as nitrogen or argon is adsorbed while the relative pressure in the adsorption isotherm is changed by a constant volume method.

[Carbon-containing material]

The content of the carbon-containing material in the porous silicon oxycarbide composite material is preferably 2.5% by mass or more and 50% by mass or less, more preferably 3% by mass or more and 30% by mass or less, still more preferably 5% by mass or more and 20% by mass or less. It is more preferable as the content of the carbon-containing material is higher since higher conductivity can be achieved. Meanwhile, when the content is too high, corrosion and the like of the carbon-containing material are likely to occur and the durability of catalytic cycle decreases.

The content of the carbon-containing material in the porous silicon oxycarbide composite material means a value measured by a combination of, for example, specification of the ratio of contained elements by elemental analysis, $^{29}$Si-NMR spectrum, and thermogravimetric differential thermal analysis (TG-DTA) in the air.

The carbon-containing material is not particularly limited, and may be, for example, one or a plurality selected from carbon black, carbon nanofibers, carbon nanotubes, or low crystalline nanocarbons. Among these, the carbon-containing material is preferably carbon black from the viewpoint of achieving high conductivity and the viewpoint of manufacturability.

In a case where the carbon-containing material is carbon black, the average diameter of primary particles of the carbon-containing material is preferably 10 nm or more and 200 nm or less, more preferably 20 nm or more and 100 nm or less, still more preferably 30 nm or more and 50 nm or less. When the average diameter of primary particles of the carbon-containing material is 10 nm or more and 200 nm or less, favorable conductivity can be achieved.

In a case where the carbon-containing material is carbon nanofibers or carbon nanotubes, the average diameter of the carbon-containing material is preferably 10 nm or more and 200 nm or less, and the length of the carbon-containing material is preferably 1 $\mu$m or more and 20 $\mu$m or less.

The shape and size of the carbon-containing material retained in the porous silicon oxycarbide composite material can be measured, for example, through observation using a transmission electron microscope or a scanning electron microscope. Moreover, the average diameter of primary particles can be determined, for example, from a microscopic image using image analysis type particle size distribution measurement software.

[Properties of porous silicon oxycarbide]

The electrical conductivity of porous silicon oxycarbide is $1.0 \times 10^{-6}$ S/cm or more, preferably $1.0 \times 10^{-4}$ S/cm or more and $1.0 \times 10^2$ S/cm or less, more preferably $1.0 \times 10^{-3}$ S/cm or more and 10 S/cm or less. A more favorable electrode catalyst for a fuel cell can be provided as the electrical conductivity of porous silicon oxycarbide is higher, but there is a case where corrosion of the carbon component may proceed in the catalytic cycle and the durability decreases when the retained amount of the carbon-containing material that contributes to the improvement of electrical conductivity is too high.

<Configuration of noble metal particles>

The noble metal particles are supported in a plurality of micropores of porous silicon oxycarbide or at a portion where some or all of the plurality of micropores are connected to each other with at least a part of the surface being exposed. Incidentally, it is not necessary that the surfaces of all the metal fine particles contained in porous silicon oxycarbide are exposed, and it is only required that the surfaces of some of the metal fine particles are exposed.

The noble metal particles are not particularly limited as long as they are noble metals having a catalytic action, and examples thereof include one or two or more selected from platinum (Pt), rhodium (Rh), palladium (Pd), ruthenium (Ru), iridium (Ir), or gold (Au). Among these, platinum is preferable from the viewpoint of high activity.

The average particle size of the noble metal particles is, for example, preferably 2 nm or more and 20 nm or less, more preferably 2 nm or more and 15 nm or less, still more preferably 2 nm or more and 10 nm or less. When the average particle size of the noble metal particles is 2 nm or more and 20 nm or less, the surface area of the noble metal particles in the electrode catalyst increases and the catalytic performance can be further improved.

The average particle size of the noble metal particles can be measured, for example, from the crystallite diameter determined from the half-value width of the diffraction peak of the noble metal in X-ray diffraction or the average value of particle sizes of the noble metal measured using an electron microscope image.

Moreover, the content of the noble metal particles when the total mass of the electrode catalyst is 100% by mass is preferably 10% by mass or more and 50% by mass or less, more preferably 7% by mass or more and 25% by mass or less, more preferably 10% by mass or more and 20% by mass or less. When the content of the noble metal particles is 10% by mass or more and 50% by mass or less, the noble metal particles are sufficiently supported on the porous silicon oxycarbide and are hardly desorbed during use, and the high conductivity due to the carbon-containing material and the excellent catalytic performance of the noble metal can be maintained over a long period of time.

<Configuration of electrode and fuel cell>

The fuel cell according to the present embodiment includes an electrode having a layer containing the electrode catalyst described above. The electrode having a layer containing the electrode catalyst may be an anode electrode or a cathode electrode or may be both an anode electrode and a cathode electrode.

Specifically, the fuel cell includes, for example, an electrolyte layer, an anode electrode provided on one side of the electrolyte layer, a first gas diffusion layer provided on the opposite side of the anode electrode to the electrolyte layer, a cathode electrode provided on the other side of the electrolyte layer, and a second gas diffusion layer provided on the opposite side of the cathode electrode to the electrolyte layer. The anode electrode functions as a fuel electrode by the gas ($H_2$) introduced from the first gas diffusion layer, and the cathode electrode functions as an air electrode by the air ($O_2$) introduced from the second gas diffusion layer. In the present embodiment, the cathode electrode or the cathode electrode may have a catalyst layer, or both of these may have a catalyst layer, but it is preferable that at least the cathode electrode have a catalyst layer from the viewpoint of activation energy.

<Method for producing electrode catalyst containing porous silicon oxycarbide composite material>

The method for producing an electrode catalyst according to the present embodiment is roughly divided into a process of producing a porous silicon oxycarbide composite material (steps (A) to (C)) and a process of producing an electrode catalyst using the obtained porous silicon oxycarbide composite material (steps (D) to (E)). Incidentally, on the premise that the electrode catalyst according to the present embodiment is obtained, other steps may be included before step (A), between the respective steps, or after step (E).

<Method for producing porous silicon oxycarbide composite material>

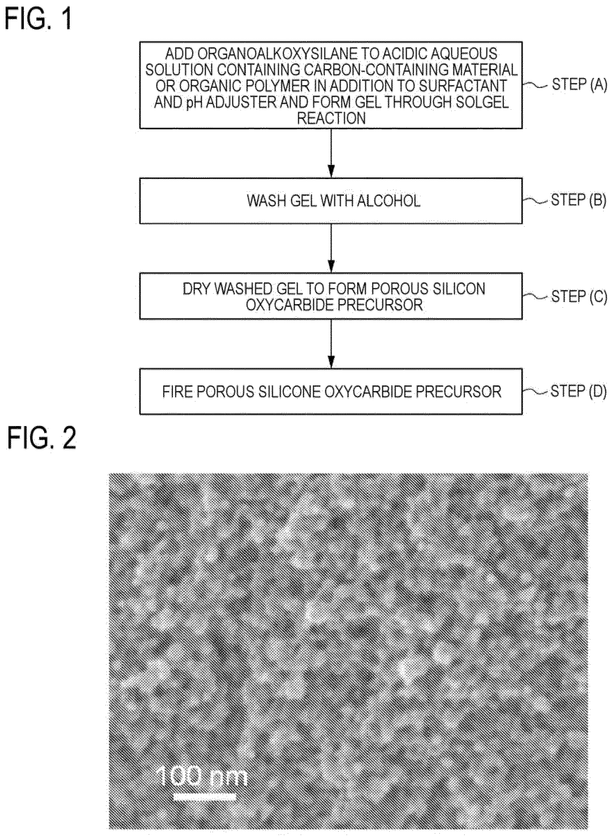

As illustrated in FIG. 1, the method for producing a porous silicon oxycarbide composite material includes a gel forming step (step (A)), a washing step (step (B)), a porous silicon oxycarbide precursor forming step (step (C)), and a firing step (step (D)). Incidentally, on the premise that the porous silicon oxycarbide composite material according to the present embodiment is obtained, steps other than those described above may be provided before and after the respective steps.

[Step (A)]

In step (A), for example, an organoalkoxysilane is added to an acidic aqueous solution containing a surfactant and a pH adjuster, and a gel is formed through a sol-gel reaction of the organoalkoxysilane. For example, while producing a hydrolysate by hydrolyzing the hydrolysable organoalkoxysilane, the pH of the reaction system is further increased, and a polycondensation reaction of the organoalkoxysilane is conducted to obtain polysilsesquioxane. The pH suitable for the polycondensation reaction varies depending on the isoelectric point of the organoalkoxysilane used, but the reaction efficiency may decrease and gel formation may be difficult when the pH is too high. This sol-gel reaction is conducted preferably at 25°C or higher and 80°C or lower, more preferably at 30°C or higher and 70°C or lower, still more preferably at 40°C or higher and 60°C or lower. This makes it possible to obtain polysilsesquioxane as a wet gel containing water as a solvent inside.

The content of the surfactant in the acidic aqueous solution is preferably 0.1% by mass or more and 50% by mass or less, more preferably 0.5% by mass or more and 35% by mass or less, still more preferably 2% by mass or more and 15% by mass or less.

The surfactant is not particularly limited, and examples thereof include a nonionic surfactant and/or a cationic surfactant. By properly selecting and using either or both of a nonionic surfactant and a cationic surfactant as a surfactant, desired BET specific surface area and pore size can be obtained. Examples of the nonionic surfactant include a polyethylene glycol type (ether type, ester/ether type) and a polyhydric alcohol type. Examples of the polyethylene glycol type nonionic surfactant include a Pluronic (registered trademark) type. Examples of the cationic surfactant include an amine salt type and a quaternary ammonium salt type. By setting the content of the surfactant in the acidic aqueous solution to 0.1% by mass or more and 50% by mass or less, a porous gel having developed mesopores and a large BET specific surface area can be formed.

The content of the pH adjuster in the acidic aqueous solution is preferably 5% by mass or more and 50% by mass or less, more preferably 5.5% by mass or more and 35% by mass or less, still more preferably 6% by mass or more and 23% by mass or less. By setting the content of the pH adjuster in the acidic aqueous solution to 5% by mass or more and 50% by mass or less, a porous polysilsesquioxane gel having high skeletal strength and flexibility can be formed.

The pH adjuster is not particularly limited, and examples thereof include a substance containing any one selected from urea, ammonia, or sodium hydroxide.

The acidic aqueous solution is not particularly limited, and examples thereof include aqueous solutions of hydrochloric acid, nitric acid, acetic acid, and the like.

The organoalkoxysilane is preferably represented by the following Formula (1) or Formula (2). By using an organoalkoxysilane represented by the following Formula (1) or Formula (2), a porous silicon oxycarbide having a desired three-dimensional skeletal structure can be easily formed.

$$R^1\text{-}SiR^2{}_x(OR^3)_{3-x} \ ... \qquad (1)$$

(in the formula, $R^1$ is any group selected from a methyl group, an ethyl group, a vinyl group, or a phenyl group, $R^2$ represents a methyl group, and $R^3$ represents a methyl group or an ethyl group. The integer x in the formula is 0 or 1.)

$$R^4\text{-}(SiR^S{}_y(OR^6)_{3-y})_2 \ ... \qquad (2)$$

(in the formula, $R^4$ includes any group selected from a methylene group, an ethylene group, a hexylene group, a vinylene group, a phenylene group, or a biphenylene group, $R^5$ represents a methyl group, and $R^6$ represents a methyl group or an ethyl group. The integer y in the formula is 0 or 1.)

Specific examples of the organoalkoxysilane represented by Formula (1) include methyltrimethoxysilane, methyltriethoxysilane, dimethyldimethoxysilane, ethyltrimethoxysilane, ethyltriethoxysilane, methyl ethyl dimethoxysilane, vinyltrimethoxysilane, vinyltriethoxysilane, methylvinyldimethoxysilane, phenyltrimethoxysilane, phenyltriethoxysilane, and methylphenyldimethoxysilane. Moreover, specific examples of the organoalkoxysilane represented by Formula (2) include bis(trimethoxysilyl)methane, bis(triethoxysilyl)methane, bis(methyldimethoxysilyl)methane, bis(methyldiethoxysilyl)methane, 1,2-bis(trimethoxysilyl)ethane, 1,2-bis(triethoxysilyl)ethane, 1,2-bis(methyldimethoxysilyl)ethane, 1,2-bis(methyldiethoxysilyl)ethane, 1,6-bis(trimethoxysilyl)hexane, 1,6-bis(triethoxysilyl)hexane, 1,6-bis(methyldimethoxysilyl)hexane, 1,6-bis(methyldiethoxysilyl)hexane, 1,2-bis(trimethoxysilyl)ethene, 1,2-bis(triethoxysilyl)ethene, 1,2-bis(methyldimethoxysilyl)ethene, 1,2-bis(methyldiethoxysilyl)ethene, 1,4-bis(trimethoxysilyl)benzene, 1,4-bis(triethoxysilyl)benzene, 1,4-bis(methyldimethoxysilyl)benzene, 1,4-bis(methyldiethoxysilyl)benzene, 4,4'-bis(trimethoxysilyl)biphenyl, 4,4'-bis(triethoxysilyl)biphenyl, 4,4'-bis(methyldimethoxysilyl)biphenyl, and 4,4'-bis(methyldiethoxysilyl)biphenyl. The above-mentioned ethene derivatives have cis/trans geometric isomers, and both isomers can be used.

In this step (A), a carbon-containing material or an organic polymer is further added to the acidic aqueous solution and a gel containing the carbon-containing material or organic polymer is formed. By adding a carbon-containing compound or an organic polymer during the sol-gel reaction of alkoxysilane, it is possible to dispose the carbon-containing material in the porous three-dimensional structural skeleton at the nanolevel after the precursor formed in step (C) has been fired in step (D) and to impart excellent conductivity to porous silicon oxycarbide, which is originally an insulator. By performing firing in step (D), the organic polymer undergoes thermal decomposition and is retained in porous silicon oxycarbide as low crystalline nanocarbons, and conductivity can be imparted.

In step (A) above, it is preferable to add a carbon-containing material or a conductive organic polymer to the acidic aqueous solution so that the mass ratio of the carbon-containing material or organic polymer to the organoalkoxysilane is 2.5 to 50 : 97.5 to 50. Moreover, the mass ratio of the carbon-containing material or organic polymer to the organoalkoxysilane is more preferably 3 to 30 : 70 to 97, still more preferably 5 to 20 : 80 to 95. By setting the mass ratio of the carbon-containing material or organic polymer to the organoalkoxysilane to a value in the above range, it is possible to achieve both a larger BET specific surface area and a higher electrical conductivity. It is not preferable that the amount of the carbon-containing material or organic polymer added is too large since separation from the sol-gel reaction system proceeds and this interferes with the formation of a gel containing polysilsesquioxane.

The carbon-containing material is not particularly limited, and may be, for example, one or a plurality selected from carbon black, carbon nanofibers, carbon nanotubes, or low crystalline nanocarbons. Among these, the carbon-containing material is preferably carbon black from the viewpoint of achieving high conductivity and the viewpoint of manufacturability.

The organic polymer is not particularly limited, and can be, for example, one or a plurality selected from phenolic resin, polystyrene, or polydivinylbenzene.

[Step (B)]

In step (B), the gel obtained in step (A) above is washed with an alcohol. The alcohol used during washing is not particularly limited, and examples thereof include methanol, ethanol, 1-propanol, and 2-propanol. This makes it possible to remove the unnecessary surfactant from the acidic aqueous solution as well as to replace water in the acidic aqueous solution with the alcohol. Moreover, after washing with alcohol has been performed, the solvent may be further replaced with a hydrocarbon-based solvent such as hexane or heptane. In the present step (B), water, which is a solvent having a high surface tension, is replaced with an alcohol or hydrocarbon-based solvent, which is a solvent having a low surface tension, shrinkage of the siloxane network can be suppressed in the drying step at normal temperature and normal pressure in step (C) to be described below, and this makes it easy to form a porous gel structure.

[Step (C)]

In step (C), the washed gel is dried to form a porous silicon oxycarbide precursor. In this step (C), a method in which supercritical drying with carbon dioxide is performed at 80°C and 14 MPa, a method in which drying is performed at room temperature and normal pressure, a method in which vacuum drying is performed at 20°C or higher and 80°C or lower, and the like may be mentioned. Among these, a method in which drying is performed at room temperature and normal pressure is preferable from the viewpoint of low manufacturing cost and obtaining a highly dense porous silicon oxycarbide precursor having developed mesopores in a case where polysilsesquioxane, which has high skeletal strength and flexibility, is formed.

[Step (D)]

In step (D), the porous silicon oxycarbide precursor containing a carbon-containing material or organic polymer is fired to obtain a porous silicon oxycarbide composite material. In this step, carbon atoms are supplied from the organic groups of polysilsesquioxane through firing to form a silicon oxycarbide skeleton, and carbon atoms are also supplied into the skeleton from the carbon-containing material or organic polymer dispersed in the gel at the nanolevel. The organic polymer undergoes thermal decomposition upon firing and is retained in porous silicon oxycarbide as low crystalline nanocarbons.

Firing can be performed by a known and commonly used method, is not particularly limited, and for example, is performed by raising the temperature at 5°C per 1 minute in an inert gas atmosphere and maintaining the highest temperature reached for a certain period of time. The highest temperature for firing is preferably 700°C or higher and 1200°C or lower, still more preferably 750°C or higher and 1100°C or lower, particularly preferably 800°C or higher and 1000°C or lower. The highest temperature maintaining time may be appropriately determined based on the effective time to obtain a porous silicon oxycarbide composite material, and is, for example, preferably 5 minutes to 16 hours, more preferably 10 minutes to 10 hours, particularly preferably 30 minutes to 3 hours. Firing may be performed in two or more stages. In other words, firing can be performed at a temperature lower than the highest reached temperature for a certain period of time in the first stage, then the temperature can be raised again, and firing can be performed. Firing may be pressureless firing.

Examples of the inert gas include nitrogen, helium, and argon. Incidentally, this inert gas may contain a reducing gas such as hydrogen gas.

Firing can be performed in a fixed bed or fluidized bed type carbonization furnace, and the heating method and kind of the carbonization furnace are not particularly limited as long as the furnace has a function of raising the temperature to a predetermined temperature. Examples of the carbonization furnace include a lead hammer furnace, a tunnel furnace, and a single furnace.

In the present step (D), a carbon-containing material or an organic polymer can be further mixed with the porous silicon oxycarbide precursor, and the mixture can be fired. In the case of mixing an organic polymer with the porous silicon oxycarbide precursor in step (D) as well, the organic polymer undergoes thermal decomposition upon firing and is retained in porous silicon oxycarbide as low crystalline nanocarbons as in the case of mixing the organic polymer in step (A).

<Method for producing electrode catalyst>

The method for producing an electrode catalyst includes a mixing step (step (E)) and a drying step (step (F)).

[Step (E)]

In the mixing step (E), the porous silicon oxycarbide composite material obtained in step (D) above and a dispersion containing noble metal colloids are mixed to obtain an electrode catalyst precursor.

The dispersion containing noble metal colloids can be obtained by adding a compound used as a starting material for the noble metal compound to a solvent such as water, performing a reduction treatment, and then producing noble metal colloids under an acidic condition. The acidic condition during the production of noble metal colloids is preferably a pH of 4 to 6. The pH adjuster is not particularly limited, and examples thereof include a substance containing any one selected from urea, ammonia, or sodium hydroxide.

Examples of the compound used as a starting material for the noble metal compound include soluble compounds of noble metals such as a noble metal complex. The noble metal complex is, for example, one or two or more selected from a platinum complex, a rhodium complex, a palladium complex, a ruthenium complex, an iridium complex, or a gold complex.

The noble metal colloids are, for example, one or two or more selected from platinum colloids, rhodium colloids, palladium colloids, ruthenium colloids, iridium colloids, or gold colloids.

Mixing of the porous silicon oxycarbide composite material and the dispersion containing noble metal colloids is preferably performed under a heated condition. The heating temperature can be, for example, 50°C or higher and 100°C or lower, and the heating time can be, for example, 1 hour or longer and 6 hours or shorter. Moreover, after the mixing, the mixture may be cooled and washed with a liquid such as water, if necessary.

In the present step (E), it is preferable to mix the porous silicon oxycarbide composite material and the dispersion containing noble metal colloids so that the content of the noble metal particles is 10% by mass or more and 50% by mass or less when the total mass of the electrode catalyst obtained in step (F) above is 100% by mass. Moreover, the porous silicon oxycarbide composite material and the dispersion containing noble metal colloids can be mixed so that the content of the noble metal particles is more preferably 7% by mass or more and 25% by mass or less, still more preferably 10% by mass or more and 20% by mass or less when the total mass of the electrode catalyst is 100% by mass. This makes it possible to obtain an electrode catalyst that can maintain the conductivity due to the carbon-containing material and the catalytic performance of the noble metal over a long period of time.

[Step (F)]

In the mixing step (F), the electrode catalyst precursor is dried to obtain an electrode catalyst containing a porous silicon oxycarbide composite material supporting noble metal particles. The drying method is not particularly limited, and for example, heating can be performed in the air for a predetermined period of time. The heating temperature can be, for example, 40°C or higher and 100°C or lower, and the heating time can be, for example, 6 hours or longer and 24 hours or shorter. Moreover, the mixture obtained in step (E) may be dried as it is, or the mixture may be subjected to solid-liquid separation before drying to take out the electrode catalyst precursor and the separated solid phase may be dried. In this manner, an electrode catalyst in which a noble metal is supported on a porous silicon oxycarbide composite material carrier is produced.

<Method for fabricating electrode and fuel cell>

The methods for fabricating an electrode and a fuel cell are not particularly limited, and electrodes such as an anode electrode and a cathode electrode can be fabricated using the electrode catalyst obtained above by a known method. Moreover, a fuel cell can be fabricated using the electrode obtained above by a known method.

EXAMPLES

Hereinafter, Examples of the invention will be explained. The invention is not limited to Examples described below.

(Example 1)

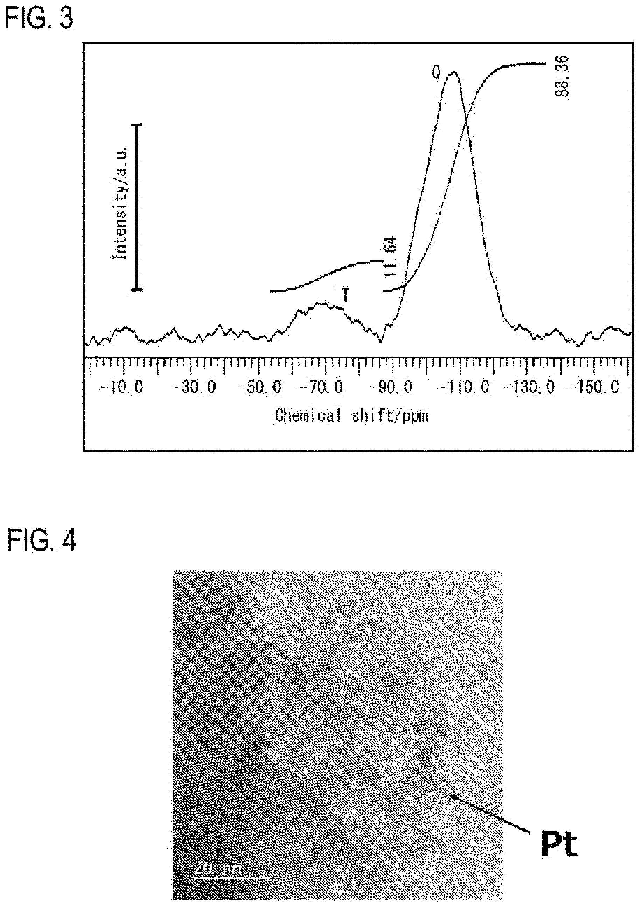

In a vial, 6 g of a 5 mM aqueous acetic acid solution (manufactured by KANTO CHEMICAL CO., INC.), 0.8 g of Pluronic (registered trademark) F-127 (manufactured by BASF), 0.5 g of urea (manufactured by KANTO CHEMICAL CO., INC.), and 0.24 g of Ketjenblack (manufactured by Lion Specialty Chemicals Co., Ltd., product name "EC-600") were placed, and stirring was performed at room temperature for 10 minutes. Thereto, 5 g of methyltrimethoxysilane (manufactured by KANTO CHEMICAL CO., INC.) was added, and stirring was performed at room temperature for 30 minutes. Thereafter, the reaction was conducted at 60°C for 4 days to obtain a wet gel. The obtained wet gel was washed with methanol (manufactured by KANTO CHEMICAL CO., INC.), dried at room temperature and normal pressure for 3 days, and then further dried at 80°C and normal pressure for 6 hours to obtain 3.5 g of a porous silicon oxycarbide precursor. Into a tubular furnace, 1 g of this porous silicon oxycarbide precursor was charged and fired under a condition which the temperature was raised to 1000°C at a rate of temperature rise of 10°C/min in a nitrogen atmosphere and kept at 1000°C for 2 hours, and then 0.8 g of the obtained solid was pulverized with a paint conditioner to obtain a powder having a particle size ($D_{50}$) of 1 $\mu$m. A scanning electron microscope image of the obtained powder is illustrated in FIG. 2. Moreover, the presence of Si bonded to C was detected from the $^{29}$Si-NMR spectrum of the powder illustrated in FIG. 3, and this verifies the formation of a porous silicon oxycarbide composite material.

(Example 2)

A porous silicon oxycarbide precursor was obtained by 3.5 g in the same manner as in Example 1 except that Pluronic F-127 was changed to 1.0 g and urea was changed to 0.4 g, and then the firing step was performed to obtain a porous silicon oxycarbide composite material at a yield of 76%.

(Example 3)

A porous silicon oxycarbide precursor was obtained by 3.4 g in the same manner as in Example 1 except that Pluronic F-127 was changed to 0.65 g, and then the firing step was performed to obtain a porous silicon oxycarbide composite material at a yield of 75%.

(Example 4)

A porous silicon oxycarbide precursor was obtained by 3.3 g in the same manner as in Example 1 except that Pluronic F-127 was changed to 0.40 g, and then the firing step was performed to obtain a porous silicon oxycarbide composite material at a yield of 74%.

(Example 5)

A porous silicon oxycarbide precursor was obtained by 3.4 g in the same manner as in Example 1 except that Pluronic F-127 was changed to 0.37 g, and then the firing step was performed to obtain a porous silicon oxycarbide composite material at a yield of 72%.

(Example 6)

A porous silicon oxycarbide precursor was obtained by 3.5 g in the same manner as in Example 1 except that Pluronic F-127 was changed to 0.34 g and urea was changed to 6 g, and then the firing step was performed to obtain a porous silicon oxycarbide composite material at a yield of 78%.

(Example 7)

A porous silicon oxycarbide precursor was obtained by 3.5 g in the same manner as in Example 1 except that the 5 mM aqueous acetic acid solution was changed to 10 g, urea was changed to 6 g, and Pluronic F-127 was changed to 0.40 g of cetyltrimethylammonium chloride (manufactured by Tokyo Chemical Industry Co., Ltd.), and then the firing step was performed to obtain a porous silicon oxycarbide composite material at a yield of 77%.

(Example 8)

A porous silicon oxycarbide precursor was obtained by 3.2 g in the same manner as in Example 7 except that urea was changed to 3 g, and then the firing step was performed to obtain a porous silicon oxycarbide composite material at a yield of 71%.

(Example 9)

A porous silicon oxycarbide precursor was obtained by 3.1 g in the same manner as in Example 8 except that cetyltrimethylammonium chloride was changed to 0.06 g, and then the firing step was performed to obtain a porous silicon oxycarbide composite material at a yield of 76%.

(Example 10)

A porous silicon oxycarbide precursor was obtained by 3.6 g in the same manner as in Example 8 except that Ketj enblack was changed to 1.5 g of phenolic resin (manufactured by DIC Corporation, product name: "PHENOLITE IF-3300"), and then the firing step was performed to obtain a porous silicon oxycarbide composite material at a yield of 65%.

(Example 11)

A porous silicon oxycarbide precursor was obtained by 3.5 g in the same manner as in Example 10 except that the phenolic resin was changed to 2.5 g, and then the firing step was performed to obtain a porous silicon oxycarbide composite material at a yield of 67%.

(Example 12)

A porous silicon oxycarbide precursor was obtained by 3.2 g in the same manner as in Example 8 except that the phenolic resin was changed to 0.24 g of carbon nanotubes (manufactured by CNano, product name: "Flotube 7000"), and then the firing step was performed to obtain a porous silicon oxycarbide composite material at a yield of 43%.

(Example 13)

A porous silicon oxycarbide precursor was obtained by 3.5 g in the same manner as in Example 8 except that Ketjenblack was changed to 0.15 g, and then the firing step was performed to obtain a porous silicon oxycarbide composite material at a yield of 70%.

(Example 14)

A porous silicon oxycarbide precursor was obtained by 3.4 g in the same manner as in Example 8 except that Ketjenblack was changed to 0.4 g, and then the firing step was performed to obtain a porous silicon oxycarbide composite material at a yield of 78%.

(Example 15)

A porous silicon oxycarbide precursor was obtained by 3.5 g in the same manner as in Example 8 except that methyltrimethoxysilane was changed to 4 g and 1 g of vinyltrimethoxysilane (manufactured by KANTO CHEMICAL CO., INC.) was used, and then the firing step was performed to obtain a porous silicon oxycarbide composite material at a yield of 79%.

(Example 16)

A porous silicon oxycarbide precursor was obtained by 3.4 g in the same manner as in Example 15 except that vinyltrimethoxysilane was changed to 1 g of phenyltrimethoxysilane (manufactured by KANTO CHEMICAL CO., INC.), and then the firing step was performed to obtain a porous silicon oxycarbide composite material at a yield of 80%.

(Example 17)

A porous silicon oxycarbide precursor was obtained by 3.5 g in the same manner as in Example 1 except that firing was performed at 700°C, and then the firing step was performed to obtain a porous silicon oxycarbide composite material at a yield of 77%.

(Example 18)

In a vial, 5 g of a 5 mM aqueous nitric acid solution (manufactured by KANTO CHEMICAL CO., INC.), 5 g of 1,2-bis(methyldiethoxysilyl)ethane (manufactured by Gelest Inc.), and 0.24 g of Ketjenblack were placed, and stirring was performed at room temperature for 30 minutes. Thereto, 3 g of polyoxyethylene-2-ethylhexyl ether (manufactured by NOF CORPORATION, NONION EH-208) was added, stirring was performed for 3 minutes, 2 g of 0.6 M tetraethylammonium hydroxide (manufactured by Tokyo Chemical Industry Co., Ltd.) was added thereto, and stirring was performed at room temperature for 30 seconds. Thereafter, the reaction was conducted at 80°C for 4 days to obtain a wet gel. The obtained wet gel was washed with methanol, dried at room temperature and normal pressure for 3 days, and then further dried at 80°C and normal pressure for 6 hours to obtain 3.0 g of a porous silicon oxycarbide precursor. Firing of 1 g of this porous silicon oxycarbide precursor was performed under a condition in which the temperature was raised to 1000°C at a rate of temperature rise of 10°C/min in a nitrogen atmosphere and kept at 1000°C for 2 hours, and then 0.7 g of the obtained solid was pulverized with a paint conditioner to obtain a porous silicon oxycarbide composite material having a particle size ($D_{50}$) of 1 $\mu$m.

(Example 19)

In a vial, 5 g of 1,2-bis(methyldiethoxysilyl)ethene (manufactured by Gelest Inc., trans isomer), 0.24 g of Ketjenblack, and 5 g of polyoxyethylene-2-ethylhexyl ether were placed, and stirring was performed at room temperature for 30 minutes. Thereto, 5 g of a 5 mM aqueous nitric acid solution was added, stirring was performed for 10 minutes, 5 g of 0.6 M tetraethylammonium hydroxide was added thereto, and stirring was performed at room temperature for 30 seconds. A porous silicon oxycarbide precursor was obtained by 2.9 g in the same manner as in Example 18 except these, and then the firing step was performed to obtain a porous silicon oxycarbide composite material at a yield of 79%.

(Example 20)

In a vial, 1.8 g of a 3 M aqueous hydrochloric acid solution (manufactured by KANTO CHEMICAL CO., INC.), 7.5 g of isopropyl alcohol (manufactured by KANTO CHEMICAL CO., INC.), 5 g of 1,2-bis(triethoxysilyl)ethane (manufactured by Tokyo Chemical Industry Co., Ltd.), 0.24 g Ketjenblack, and 0.01 g of polyoxyethylene-2-ethylhexyl ether were placed, and stirring was performed at room temperature for 10 minutes. Thereto, 3.5 g of 13.4 M ammonium hydroxide (manufactured by KANTO CHEMICAL CO., INC.) was added, and stirring was performed at room temperature for 30 minutes.

Thereafter, the reaction was conducted at 60°C for 4 days to obtain a wet gel. The obtained wet gel was washed with methanol, dried at room temperature and normal pressure for 3 days, and then further dried at 80°C and normal pressure for 6 hours to obtain 2.4 g of a porous silicon oxycarbide precursor. Firing of 1 g of this porous silicon oxycarbide precursor was performed under a condition in which the temperature was raised to 1000°C at a rate of temperature rise of 10°C/min in a nitrogen atmosphere and kept at 1000°C for 2 hours, and then 0.7 g of the obtained solid was pulverized with a paint conditioner to obtain a porous silicon oxycarbide composite material having a particle size ($D_{50}$) of 1 $\mu$m.

(Comparative Example 1)

Under Ar flow, 18.6 g of novolac phenolic resin (manufactured by Gun Ei Chemical Industry Co., Ltd., PSM4261) was dissolved in 60 ml of diethylene glycol (manufactured by Tokyo Chemical Industry Co., Ltd., molecular weight 106), which was a pore-forming agent, and 108.6 g of tetraethoxysilane (manufactured by Tokyo Chemical Industry Co., Ltd.) was added dropwise while stirring was performed. Thereafter, 4.68 g of p-toluenesulfonic acid (manufactured by Tokyo Chemical Industry Co., Ltd.) was added as an acid catalyst to initiate polymerization. The solution was heated at a rate of temperature rise of 25°C/hour to 115°C, which was a temperature near the boiling point of the solution, and then maintained at that temperature for 20 hours to perform reflux. Next, the temperature was raised to 200°C and the solution was maintained at that temperature for 24 hours in a vacuum to carry out thermal curing and solvent removal treatment. The obtained polymer was maintained at 600°C for 1 hour in an Ar atmosphere for primary firing. Thereafter, secondary firing was performed by maintaining the polymer at a temperature of 1000°C for 3 hours in an Ar atmosphere to obtain the desired porous silicon oxycarbide.

(Comparative Example 2)

A porous silicon oxycarbide precursor was obtained by 3.0 g in the same manner as in Example 1 except that urea was not used, and then the firing step was performed to obtain a porous silicon oxycarbide composite material at a yield of 35%.

(Comparative Example 3)

A porous silicon oxycarbide precursor was obtained by 3.5 g in the same manner as in Example 1 except that the amount of Ketj enblack charged was changed to 0.10 g, and then the firing step was performed to obtain a porous silicon oxycarbide composite material at a yield of 69%.

Measurement was performed on Examples 1 to 20 and Comparative Examples 1 to 3 described above by the following methods.

[Measurement of BET specific surface area, pore volume and pore size]

Powder of the porous silicon oxycarbide composite material or porous silicon oxycarbide was weighed by 0.04 g, was placed in a sample tube, and underwent pretreatment by vacuum drying at 100°C for 6 hours. After the pretreatment, nitrogen was adsorbed onto the sample at -196°C while the relative pressure was changed using a specific surface area/pore distribution instrument (manufactured by MicrotracBEL Corp., instrument name "BELSORP-mini II").

[Measurement of electrical conductivity]

Powder of the porous silicon oxycarbide composite material or porous silicon oxycarbide was introduced into a powder resistance measurement system (manufactured by Mitsubishi Chemical Analytech Co., Ltd., system name "MCP-PD51"), and pressure was applied to the sample using the attached hydraulic pump. After the pressure reached 12 kN, the resistivity was measured using a resistivity meter (manufactured by Mitsubishi Chemical Analytech Co., Ltd., meter name: "Loresta-GX"), and the electrical conductivity was calculated from the resistivity using the following equation. These measurement results are presented in Table 1.

$$\text{Electrical conductivity (S/cm)} = (\text{powder resistance } (\Omega\ \text{cm}))^{-1}$$

[Table 1]

| | Specific surface area (m$^2$/g) | Pore volume (cm$^3$/g) | Pore size (nm) | Electrical conductivity (S/cm) |
|---|---|---|---|---|
| Example 1 | 280 | 1.6 | 20 | $4.2 \times 10^{-3}$ |
| Example 2 | 250 | 1.5 | 40 | $2.5 \times 10^{-3}$ |
| Example 3 | 230 | 1.2 | 100 | $1.2 \times 10^{-3}$ |
| Example 4 | 225 | 1 | 150 | $1.2 \times 10^{-3}$ |
| Example 5 | 210 | 1 | 200 | $1.1 \times 10^{-3}$ |
| Example 6 | 240 | 1.1 | 15 | $2.2 \times 10^{-3}$ |
| Example 7 | 380 | 0.8 | 5 | $2.5 \times 10^{-3}$ |
| Example 8 | 330 | 0.7 | 10 | $2.4 \times 10^{-3}$ |
| Example 9 | 300 | 0.5 | 50 | $1.1 \times 10^{-3}$ |
| Example 10 | 150 | 0.6 | 10 | $7.7 \times 10^{-6}$ |
| Example 11 | 100 | 0.5 | 10 | $1.8 \times 10^{-3}$ |
| Example 12 | 180 | 0.5 | 10 | $3.3 \times 10^{-4}$ |
| Example 13 | 340 | 0.7 | 10 | $3.4 \times 10^{-6}$ |
| Example 14 | 315 | 0.6 | 10 | $1.0 \times 10^{0}$ |
| Example 15 | 350 | 0.7 | 10 | $7.2 \times 10^{-3}$ |
| Example 16 | 330 | 0.6 | 8 | $9.2 \times 10^{-3}$ |
| Example 17 | 280 | 1.6 | 20 | $2.7 \times 10^{-3}$ |
| Example 18 | 520 | 0.8 | 25 | $3.3 \times 10^{-3}$ |
| Example 19 | 480 | 0.7 | 25 | $6.7 \times 10^{-3}$ |
| Example 20 | 410 | 0.5 | 4 | $2.4 \times 10^{-3}$ |
| Comparative Example 1 | 70 | 0.2 | 10 | $1.0 \times 10^{-9}$ |
| Comparative Example 2 | 50 | 0.2 | 5 | $2.6 \times 10^{-3}$ |
| Comparative Example 3 | 370 | 1.8 | 35 | $1.6 \times 10^{-8}$ |

As presented in Table 1, in Examples 1 to 20, the BET specific surface area of the porous silicon oxycarbide composite materials was 100 m$^2$/g or more, the pore volume was 0.5 cm$^3$/g or more, the pore size was 2 nm or more and 200 nm or less, and the electrical conductivity was $1.0 \times 10^{-6}$ S/cm or more. From these results, it has been found that a porous silicon oxycarbide composite material having a large BET specific surface area and a high electrical conductivity can be obtained.

Meanwhile, in Comparative Example 1, the BET specific surface area of the porous silicon oxycarbide was 70 $m^2$/g, the pore volume was 0.2 $cm^3$/g, and the pore size was 10 nm. Furthermore, the electrical conductivity was $1.0 \times 10^{-9}$ S/cm. Therefore, it has been found that both the BET specific surface area and the electrical conductivity are significantly smaller than those in any of Examples 1 to 20 in a case where a porous silicon oxycarbide precursor is not synthesized through a sol-gel reaction.

In Comparative Example 2, the BET specific surface area of the porous silicon oxycarbide composite material was 50 $m^2$/g, the pore volume was 0.2 $cm^3$/g, and the pore size was 5 nm. Furthermore, the electrical conductivity was $2.6 \times 10^{-3}$ S/cm. Therefore, it has been found that the BET specific surface area is significantly smaller than that in any of Examples 1 to 20 in a case where urea is not used as a pH adjuster.

In Comparative Example 3, the BET specific surface area of the porous silicon oxycarbide composite material was 370 $m^2$/g, the pore volume was 1.8 $cm^3$/g, and the pore size was 35 nm. Furthermore, the electrical conductivity was $1.6 \times 10^{-8}$ S/cm. Therefore, it has been found that the electrical conductivity is significantly lower than that in any of Examples 1 to 20 in a case where the amount of Ketjenblack used is significantly smaller than that in Example 1.

(Example 21)

[Preparation of electrode catalyst containing noble metal]

In 60 mL of ultrapure water, 0.43 g of chloroplatinic acid hexahydrate was dissolved, 3.1 g of sodium hydrogen sulfite was added thereto to conduct a reduction reaction, and then 280 mL of ultrapure water was added for dilution. Next, 35% hydrogen peroxide (24 mL) was added dropwise while the pH was adjusted to about 5 by addition of a 5% aqueous sodium hydroxide solution to obtain a dispersion containing platinum colloids. Subsequently, the colloidal dispersion was fractionated so that the amount of platinum supported on the carrier was 15% of the total mass including the mass of the carrier, 0.4 g of the porous silicon oxycarbide composite material synthesized in Example 1 was added thereto as a carrier, and mixing was performed at 90°C for 3 hours. After cooling, solid-liquid separation was performed, and the obtained powder was thoroughly washed with ultrapure water to remove chloride ions, and then dried in the air at 60°C for 12 hours to obtain electrode catalyst A in which platinum was supported on a porous silicon oxycarbide composite material carrier. A transmission electron microscope image of electrode catalyst A is illustrated in FIG. 4. It was observed that platinum particles having a particle size of about 5 nm were supported.

[Fabrication of electrode]

A glassy carbon (GC) electrode having a diameter of 5 mm was polished using a wrapping film and alumina paste, and then underwent ultrasonic cleaning using ultrapure water. Electrode catalyst A was added to a 60% by volume aqueous ethanol solution and dispersed using an ultrasonic homogenizer. This was dropped onto the GC disk, and drying was performed at normal temperature for 12 hours. After drying, a 5% Nafion (registered trademark) solution was dropped onto the electrode catalyst on the GC disk so that the dry film thickness was 50 nm, and drying was performed at normal temperature for 12 hours.

[Electrode evaluation by electrochemical measurement]

Electrode evaluation was carried out using an electrochemical measurement system HZ-5000 manufactured by Hokuto Denko Corp. A 0.1 M aqueous perchloric acid solution was purged with nitrogen gas for 30 minutes, and then cleaning was performed 50 times in a potential range of 0.05 to 1.2 V at a sweep rate of 150 mV/s using a reversible hydrogen electrode (RHE) as a reference electrode. Thereafter, cyclic voltammetry (CV) measurement was carried out in a potential range of 0.05 to 1.2 V at a sweep rate of 100 mV/s, which was used as the main measurement. Electrochemically active surface area (ECSA) analysis was carried out using hydrogen adsorption waves observed at 0.4 V or less. Furthermore, in order to examine the stability of the electrode catalyst at 1.0 V or more, the electrode catalyst was swept in a potential range of 1.0 to 1.5 V at 500 times and then CV measurement was performed in a potential range of 0.05 to 1.2 V

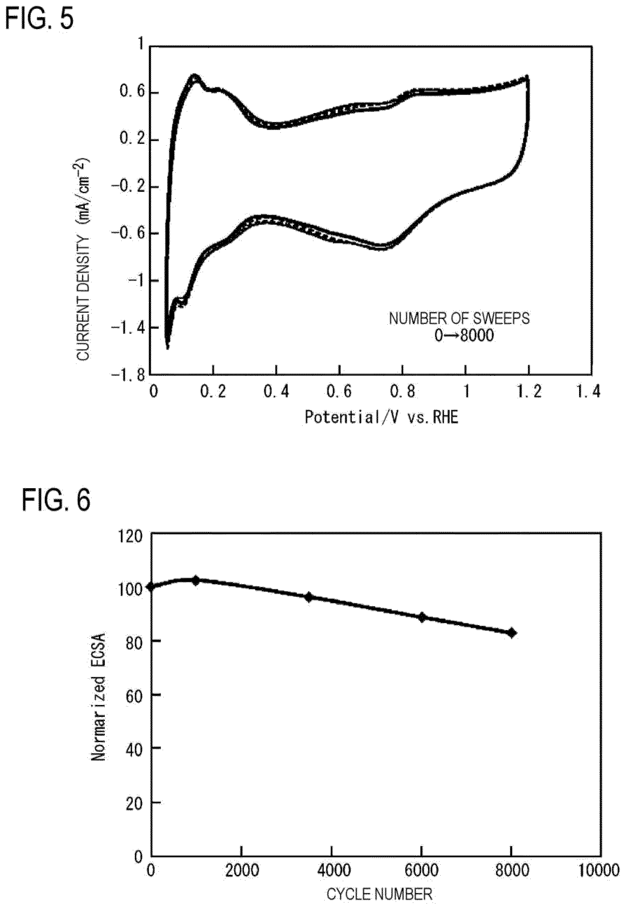

With this measurement procedure as one set, 10 or more sets (sweeping of 5000 cycles or more) were performed. The CV measurement results of electrode catalyst A are illustrated in FIG. 5. The current value in each measurement cycle was constant. The changes in ECSA with respect to the measurement cycles are illustrated in FIG. 6. The evaluation up to 8,000 cycles revealed that ECSA decreased by about 20% of the initial value, and it has been found that electrode catalyst A deteriorates little and has high potential stability.

(Comparative Example 4)

In the same manner as in Example 21 except that 0.4 g of Ketjenblack was used as a carrier instead of using 0.4 g of the porous silicon oxycarbide composite material synthesized in Example 1 as a carrier, preparation of an electrode catalyst containing a noble metal (preparation of electrode catalyst B), fabrication of an electrode, and evaluation of the electrode by electrochemical measurement were performed.

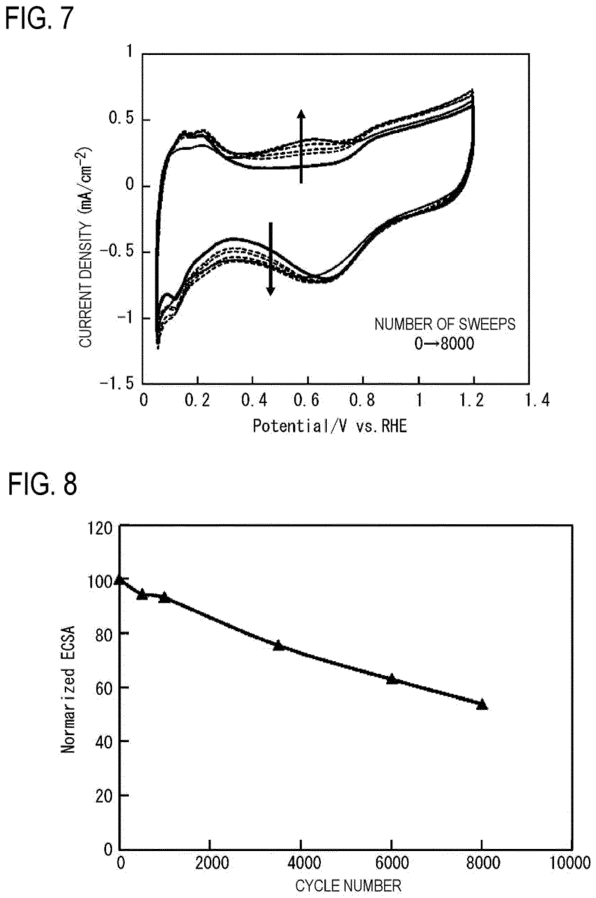

The CV measurement results of electrode catalyst B are illustrated in FIG. 7. As the potential was swept, the current value around 0.2 to 0.6 V increased as well as a redox peak of the quinone group generated by carbon deterioration appeared around 0.6 V The changes in ECSA with respect to the measurement cycles are illustrated in FIG. 8. The evaluation up to 8000 cycles revealed that ECSA decreased by about 50% of the initial value, and it has been found that electrode catalyst B prepared using a carbon-based material as a carrier has low high potential stability and is inferior in durability as compared to the results of electrode catalyst A described in Example 21.

(Example 22)

[Fabrication of fuel cell]

(Preparation of anode catalyst ink)

Carbon black supporting 0.45 g of Pt (Pt/CB, manufactured by Tanaka Kikinzoku Kogyo K.K., TEC10E50E, supported Pt amount 46 wt%) and Nafion were mixed so that the volume ratio was 1.0, and this mixture, 2.5 g of ethanol, 2 g of water, and zirconia balls (diameter 5 mm) were placed in a zirconia pot and mixed for 30 minutes using a ball mill (manufactured by Ito Seisakusho Co., Ltd, PLS-1L). The mixture obtained by mixing using this ball mill will be hereinafter referred to as an anode catalyst ink.

(Preparation of cathode catalyst ink)

Electrode catalyst A, water, and ethanol were mixed and dispersed using an ultrasonic bath, and then Nafion (manufactured by FUJIFILM Wako Pure Chemical Corporation, DE521) was added and dispersed for 1 hour using an ultrasonic homogenizer (manufactured by Branson Ultrasonics Corporation, Sonifier 250D). The obtained mixture will be hereinafter referred to as a cathode catalyst ink.

Moreover, as a reference, a cathode catalyst ink was prepared in the same manner as in Example 22 except that Pt/CB (manufactured by Tanaka Kikinzoku Kogyo K.K., TEC10E20E, supported Pt amount 19 wt%) was used instead of electrode catalyst A and Pt/CB, water, and ethanol were mixed.

To form an anode catalyst coating film, the anode catalyst ink was applied onto a PTFE base material using a bar coater (manufactured by Imoto machinery Co., LTD., IMC-7015) so that the platinum basis weight was 0.3 mg/cm$^2$.

Meanwhile, to form a cathode catalyst layer, the cathode catalyst ink was applied to a polymer electrolyte membrane (manufactured by DuPont, Nafion NR211) using a spray coater (manufactured by ACING TECHNOLOGIES CO., LTD., Model AV-8) so that the platinum basis weight was 0.3 mg/cm$^2$.

To fabricate an electrode membrane for fuel cells (CCM) including an electrode catalyst layer and a polymer electrolyte membrane, the anode catalyst coated film was hot pressed (140°C, pressure 10 kg·f/cm$^2$) for 3 minutes on the polymer electrolyte surface on which the cathode catalyst layer was not coated using a hot press machine (manufactured by Imoto machinery Co., LTD., IMC-1858).

In the CCM, a gas diffusion layer (GDL) (manufactured by SGL, 28BC) was stacked on both sides of each electrode catalyst layer to obtain a membrane electrode assembly (MEA) in which a cathode catalyst layer and an anode catalyst layer were laminated on a polymer electrolyte membrane so as to face each other.

A single cell was assembled using the MEA and installed in a power generation evaluation instrument (manufactured by Panasonic Production Engineering Co., Ltd., FCE-1).

[Measurement of I-V characteristic and cell resistance]

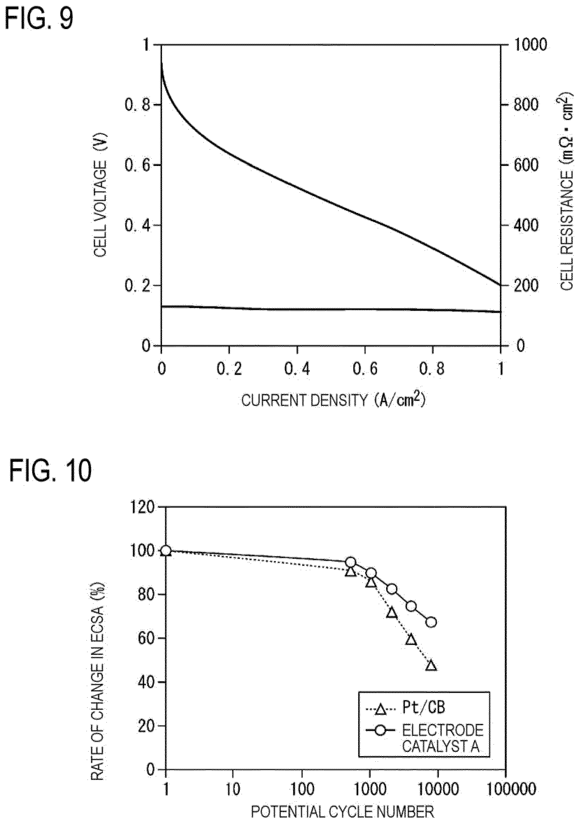

The relation between current and voltage (I-V) was measured using an electronic load (manufactured by KIKUSUI ELECTRONICS CORP, PLZ-164WA). Hydrogen (0.5 NL/min) was introduced into the anode, and air (1.0 NL/min) was introduced into the cathode. The back pressure was set to 100 kPaG. The temperature was kept at 80°C and the relative humidity was set to 100% RH. FIG. 9 illustrates the measurement results of the I-V characteristic and cell resistance of a fuel cell fabricated using electrode catalyst A in the cathode catalyst layer.

As a result, the I-V characteristic was 0.2 V at 1 A/cm$^2$, and the cell resistance was 127 mV·cm$^2$ at 1 A/cm$^2$, and it has been found that excellent catalytic performance leads to favorable battery performance.

[Measurement of potential fluctuation durability]

Hydrogen (0.5 NL/min) was introduced into the anode, air (1.0 NL/min) was introduced into the cathode, the potential fluctuation durability test was conducted at a temperature of 80°C and a relative humidity of 100% RH and in a potential range of 0.6 V to 0.9 V (maintained for 3 seconds at each potential), and the potential fluctuation durability was evaluated from the rate of change in electrochemically effective surface area (ECSA). Hydrogen (0.5 NL/min) was introduced into the anode, air (1.0 NL/min) was introduced into the cathode, and sweeping was performed 5 times at a temperature of 80°C and a relative humidity of 100% RH in a sweep potential range of 0.05 V to 0.9 V by cyclic voltammetry (CV), and ECSA was calculated using the quantity of electricity for hydrogen adsorption at the fifth time. The measurement results of potential fluctuation durability of a fuel cell fabricated using electrode catalyst A in the cathode catalyst layer and the measurement results of potential fluctuation durability of a fuel cell fabricated using Pt/CB (TEC10E20E) in the cathode catalyst layer as a reference are each illustrated in FIG. 10.

As a result, the ECSA retention rate of Pt/CB up to 8000 cycles was 48% while that of electrode catalyst A was 68%, and it has been found that electrode catalyst A offers high durability.

INDUSTRIAL APPLICABILITY

The electrode catalyst of the present embodiment contains a porous silicon oxycarbide composite material having both a large BET specific surface area and high conductivity, and is thus suitable as an electrode catalyst used in a catalyst layer of an electrode for fuel cells.

**Claims**

1. An electrode catalyst containing a porous silicon oxycarbide composite material, the electrode catalyst comprising:

   a porous silicon oxycarbide composite material containing porous silicon oxycarbide having a three-dimensional skeletal structure and a carbon-containing material retained in the three-dimensional skeletal structure; and
   noble metal particles supported on the porous silicon oxycarbide composite material, wherein
   the porous silicon oxycarbide composite material has a BET specific surface area of 100 $m^2$/g or more and an electrical conductivity of $1.0 \times 10^{-6}$ S/cm or more.

2. The electrode catalyst containing a porous silicon oxycarbide composite material according to claim 1, wherein a total pore volume of the porous silicon oxycarbide composite material of the porous silicon oxycarbide composite material is 0.5 $cm^3$/g or more.

3. The electrode catalyst containing a porous silicon oxycarbide composite material according to claim 1 or 2, wherein a pore size of the porous silicon oxycarbide composite material is 2 nm or more and 200 nm or less.

4. The electrode catalyst containing a porous silicon oxycarbide composite material according to claim 1, wherein a content of the carbon-containing material in the porous silicon oxycarbide composite material is 2.5% by mass or more and 50% by mass or less.

5. The electrode catalyst containing a porous silicon oxycarbide composite material according to claim 4, wherein the carbon-containing material includes one or a plurality selected from carbon black, carbon nanofibers, carbon nanotubes, or low crystalline nanocarbons.

6. The electrode catalyst containing a porous silicon oxycarbide composite material according to claim 5, wherein an average diameter of primary particles of the carbon-containing material is 10 nm or more and 200 nm or less.

7. The electrode catalyst containing a porous silicon oxycarbide composite material according to claim 1, wherein an average particle size of the noble metal particles is 2 nm or more and 20 nm or less.

8. The electrode catalyst containing a porous silicon oxycarbide composite material according to claim 1, wherein a content of the noble metal particles is 10% by mass or more and 50% by mass or less when a total mass of the electrode catalyst is 100% by mass.

9. The electrode catalyst containing a porous silicon oxycarbide composite material according to claim 7 or 8, wherein the noble metal particles are formed of one or two or more selected from platinum (Pt), rhodium (Rh), palladium (Pd), ruthenium (Ru), iridium (Ir), or gold (Au).

10. An electrode comprising a layer containing the electrode catalyst according to claim 1 or 2.

11. A fuel cell comprising the electrode according to claim 10.

12. A method for producing an electrode catalyst containing a porous silicon oxycarbide composite material, the method comprising:

a step (A) of adding an organoalkoxysilane to an acidic aqueous solution containing a surfactant and a pH adjuster and forming a gel through a sol-gel reaction of the organoalkoxysilane;
a step (B) of washing the gel with an alcohol;
a step (C) of drying the washed gel to form a porous silicon oxycarbide precursor;
a step (D) of firing the porous silicon oxycarbide precursor to obtain a porous silicon oxycarbide composite material;
a step (E) of mixing the porous silicon oxycarbide composite material and a dispersion containing noble metal colloids to obtain an electrode catalyst precursor; and
a step (F) of drying the electrode catalyst precursor to obtain an electrode catalyst containing a porous silicon oxycarbide composite material supporting noble metal particles, wherein
a carbon-containing material or an organic polymer is further added to the acidic aqueous solution and a gel containing the carbon-containing material or organic polymer is formed in the step (A).

13. The method for producing an electrode catalyst containing a porous silicon oxycarbide composite material according to claim 12, wherein the sol-gel reaction is conducted at 25°C or higher and 80°C or lower in the step (A).

14. The method for producing an electrode catalyst containing a porous silicon oxycarbide composite material according to claim 12, wherein the organoalkoxysilane is represented by the following Formula (1) or Formula (2):

$$R^1\text{-}SiR^2_x(OR^3)_{3-x} \ldots \qquad (1)$$

(in the formula, $R^1$ is any group selected from a methyl group, an ethyl group, a vinyl group, or a phenyl group, $R^2$ represents a methyl group, $R^3$ represents a methyl group or an ethyl group, and an integer x is 0 or 1);

$$R^4\text{-}(SiR^S_y(OR^6)_{3-y})_2 \ldots \qquad (2)$$

(in the formula, $R^4$ includes any group selected from a methylene group, an ethylene group, a hexylene group, a vinylene group, a phenylene group, or a biphenylene group, $R^5$ represents a methyl group, $R^6$ represents a methyl group or an ethyl group, and an integer y is 0 or 1).

15. The method for producing an electrode catalyst containing a porous silicon oxycarbide composite material according to claim 12, wherein a content of the surfactant in the acidic aqueous solution is 0.1% by mass or more and 50% by mass or less.

16. The method for producing an electrode catalyst containing a porous silicon oxycarbide composite material according to claim 15, wherein the surfactant is a nonionic surfactant and/or a cationic surfactant.

17. The method for producing an electrode catalyst containing a porous silicon oxycarbide composite material according to claim 12, wherein a content of the pH adjuster in the acidic aqueous solution is 5% by mass or more and 50% by mass or less.

18. The method for producing an electrode catalyst containing a porous silicon oxycarbide composite material according to claim 16, wherein the pH adjuster includes any one selected from urea, ammonia, or sodium hydroxide.

19. The method for producing an electrode catalyst containing a porous silicon oxycarbide composite material according to claim 12, wherein a mass ratio of the carbon-containing material or organic polymer to the organoalkoxysilane is 2.5 to 50 : 97.5 to 50.

20. The method for producing an electrode catalyst containing a porous silicon oxycarbide composite material according to claim 19, wherein the carbon-containing material includes one or a plurality selected from carbon black, carbon nanofibers, carbon nanotubes, or low crystalline nanocarbons.

21. The method for producing an electrode catalyst containing a porous silicon oxycarbide composite material according to claim 20, wherein an average diameter of primary particles of the carbon-containing material is 10 nm or more and 200 nm or less.

22. The method for producing an electrode catalyst containing a porous silicon oxycarbide composite material according to claim 19, wherein the organic polymer includes one or a plurality selected from phenolic resin, polystyrene, or polydivinylbenzene.

23. The method for producing an electrode catalyst containing a porous silicon oxycarbide composite material according to claim 12, wherein the surfactant is removed from the acidic aqueous solution as well as water in the acidic aqueous solution is replaced with the alcohol in the step (B).

24. The method for producing an electrode catalyst containing a porous silicon oxycarbide composite material according to claim 12, wherein the washed gel is dried at room temperature and normal pressure in the step (C).

25. The method for producing an electrode catalyst containing a porous silicon oxycarbide composite material according to claim 12, wherein the porous silicon oxycarbide composite material is fired at 700°C or higher and 1200°C or lower in the step (D).

26. The method for producing an electrode catalyst containing a porous silicon oxycarbide composite material according to claim 12, wherein the porous silicon oxycarbide composite material and a dispersion containing noble metal colloids are mixed in the step (E) so that a content of the noble metal particles is 10% by mass or more and 50% by mass or less when a total mass of the electrode catalyst obtained in the step (F) is 100% by mass.

27. The method for producing an electrode catalyst containing a porous silicon oxycarbide composite material according to claim 26, wherein the noble metal colloids in the step (E) include one or two or more selected from platinum colloids, rhodium colloids, palladium colloids, ruthenium colloids, iridium colloids, or gold colloids.

FIG. 1

| | |
|---|---|
| ADD ORGANOALKOXYSILANE TO ACIDIC AQUEOUS SOLUTION CONTAINING CARBON-CONTAINING MATERIAL OR ORGANIC POLYMER IN ADDITION TO SURFACTANT AND pH ADJUSTER AND FORM GEL THROUGH SOLGEL REACTION | STEP (A) |
| WASH GEL WITH ALCOHOL | STEP (B) |
| DRY WASHED GEL TO FORM POROUS SILICON OXYCARBIDE PRECURSOR | STEP (C) |
| FIRE POROUS SILICONE OXYCARBIDE PRECURSOR | STEP (D) |

FIG. 2

100 nm

FIG. 3

FIG. 4

FIG. 5

FIG. 6

## FIG. 7

## FIG. 8

FIG. 9

FIG. 10

## INTERNATIONAL SEARCH REPORT

| International application No. |
|---|
| **PCT/JP2022/040673** |

**A. CLASSIFICATION OF SUBJECT MATTER**

*H01M 4/86*(2006.01)i; *H01M 4/88*(2006.01)i; *H01M 4/90*(2006.01)i; *H01M 4/92*(2006.01)i; *H01M 4/96*(2006.01)i; *H01M 8/10*(2016.01)i

FI: H01M4/86 B; H01M4/86 M; H01M4/88 K; H01M4/90 M; H01M4/92; H01M4/96 B; H01M8/10 101

According to International Patent Classification (IPC) or to both national classification and IPC

**B. FIELDS SEARCHED**

Minimum documentation searched (classification system followed by classification symbols)

H01M4/86; H01M4/88; H01M4/90; H01M4/92; H01M4/96; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 108365184 A (JIANGSU UNIVERSITY) 03 August 2018 (2018-08-03) paragraphs [0028]-[0045] | 1-27 |
| A | JP 2015-160762 A (TOKAI CARBON CO., LTD.) 07 September 2015 (2015-09-07) paragraphs [0012]-[0182] | 1-27 |
| A | JP 2015-027268 A (NISSAN MOTOR CO., LTD.) 12 February 2015 (2015-02-12) paragraphs [0015]-[0162] | 1-27 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2023** | **17 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2022/040673** |

| Patent document cited in search report | | | Publication date (day/month/year) | Patent family member(s) | Publication date (day/month/year) |
|---|---|---|---|---|---|
| CN | 108365184 | A | 03 August 2018 | (Family: none) | |
| JP | 2015-160762 | A | 07 September 2015 | (Family: none) | |
| JP | 2015-027268 | A | 12 February 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021180603 A
- JP 2015160762 A
- JP H11510643 A

**Non-patent literature cited in the description**

- **T. C. DE ALMEIDA E SILVA et al.** *Catalysis Science & Technology v9,* 2019, 854-866
- **P. R. ARAVIND et al.** *Microporous and Mesoporous Materials v142,* 2011, 511-517